(19) Europäisches Patentamt

European Patent Office

Office européen des brevets

(11) **EP 0 996 558 B1**

(12) **EUROPÄISCHE PATENTSCHRIFT**

(45) Veröffentlichungstag und Bekanntmachung des Hinweises auf die Patenterteilung:
**24.05.2006 Patentblatt 2006/21**

(21) Anmeldenummer: **99911614.8**

(22) Anmeldetag: **23.02.1999**

(51) Int Cl.:
***B60T 8/00*** *(2006.01)*

(86) Internationale Anmeldenummer:
**PCT/DE1999/000482**

(87) Internationale Veröffentlichungsnummer:
**WO 1999/051475 (14.10.1999 Gazette 1999/41)**

(54) **VERFAHREN UND VORRICHTUNG ZUR STABILISIERUNG EINES FAHRZEUGES**

METHOD AND DEVICE FOR STABILIZING A VEHICLE

PROCEDE ET DISPOSITIF POUR LA STABILISATION D'UN VEHICULE

(84) Benannte Vertragsstaaten:
**DE FR GB**

(30) Priorität: **07.04.1998 DE 19815497**

(43) Veröffentlichungstag der Anmeldung:
**03.05.2000 Patentblatt 2000/18**

(73) Patentinhaber: **ROBERT BOSCH GMBH**
**70442 Stuttgart (DE)**

(72) Erfinder:
• **FAYE, Ian**
 **D-70192 Stuttgart (DE)**
• **LEIMBACH, Klaus-Dieter**
 **D-71696 Möglingen (DE)**
• **WETZEL, Gabriel**
 **D-70435 Stuttgart (DE)**

(56) Entgegenhaltungen:
**EP-A- 0 321 894      EP-A- 0 758 601**
**EP-A- 0 807 562      DE-C- 19 602 879**

**Beschreibung**

Stand der Technik

Die Erfindung betrifft ein Verfahren und eine Vorrichtung zur Stabilisierung eines Fahrzeuges. Solche Verfahren und Vorrichtungen sind aus dem Stand der Technik in vielerlei Modifikationen bekannt.

Dokument EP-A-0 321 894 offenbart den Oberbegriff des Anspruchs 1.

Aus der DE-OS 19 02 944 ist eine Einrichtung zum Verhindern des Schleuderns von Fahrzeugen bekannt. Die Einrichtung enthält Meßinstrumente zur Erfassung des augenblicklichen Fahrzustandes, die mit einem, auf bestimmte Grenzwerte des Fahrzeuges ansprechenden Steuergerät verbunden sind. Die Einrichtung enthält ferner einschaltbare Mittel für die selbständige Steuerung wenigstens einer zur Spurhaltung des Fahrzeuges dienenden Einrichtung, die bei Erreichen eines vorbestimmten Grenzwertes für die Querbeschleunigung durch das Steuergerät ausgelöst werden. Wird bei einer Fahrzeugauslegung eine maximal mögliche Querbeschleunigung festgestellt, so ist das Programm für das Steuergerät auf einen kleineren Wert eingestellt. Dies bedeutet, daß bereits unterhalb des kritischen Schwellenwertes, d.h. vor einem überzogenen Fahrzustand, unabhängig von der Reaktion des Fahrers, die Bremsen betätigt und das Leistungsregelglied der Maschine auf geringere Fahrleistung zurückgenommen wird.

Aus der DE 35 45 715 A1 ist eine Einrichtung zur Vortriebsregelung an Kraftfahrzeugen im Sinne der Einhaltung stabiler Fahrzustände bekannt. Diese Einrichtung enthält eine Recheneinheit zur Bestimmung eines Sollwertes bzw. eines Toleranzbereiches für die Drehzahldifferenz der Vorderräder oder der Querbeschleunigung oder der Giergeschwindigkeit und eine Vergleichseinheit, in welcher dieser Sollwert bzw. Toleranzbereich mit dem gemessenen Istwert verglichen wird. Die Differenz zwischen Istwert und Sollwert bzw. Toleranzbereich dient als Steuersignal für die Bremsen der Räder und/oder für ein Leistungsstellglied des Fahrzeugmotors.

Bei den vorstehend beschriebenen, zum Stand der Technik gehörenden Einrichtungen werden in Abhängigkeit eines Vergleiches zwischen einem Istwert einer die Querdynamik des Fahrzeuges beschreibenden Größe und einem zugehörigen Grenzwert die Bremsen der Räder und/oder ein Leistungsstellglied für den Motor so angesteuert, daß das Fahrzeug aufgrund der Reduzierung der Fahrzeuggeschwindigkeit stabilisiert wird. Die sich aufgrund der Eingriffe in die Bremsen bzw. in den Motor ergebende Fahrzeuggeschwindigkeit ist hierbei nicht vorgegeben.

Die Aufgabe der vorliegenden Erfindung besteht darin, bestehende Vorrichtungen bzw. Verfahren zur Stabilisierung von Fahrzeugen dahingehend zu verbessern, daß für den Fall, bei dem eine die Querdynamik des Fahrzeuges beschreibende Größe größer als ein oder gleich einem charakteristischen Wert für die die Querdynamik des Fahrzeuges beschreibende Größe ist, ausgehend von der Fahrzeuggeschwindigkeit ein definierter Zustand für das Fahrzeug eingestellt wird.

Diese Aufgabe wird durch die Merkmale des Anspruchs 1 bzw. durch die des Anspruchs 12 gelöst.

Vorteile der Erfindung

Das erfindungsgemäße Verfahren zur Stabilisierung eines Fahrzeuges wird insbesondere zur Vermeidung des Umkippens eines Fahrzeuges um eine in Längsrichtung des Fahrzeuges orientierte Fahrzeugachse eingesetzt. Hierzu wird eine die Querdynamik des Fahrzeuges beschreibende Größe ermittelt, die mit wenigstens einem charakteristischen Wert, insbesondere einem Schwellenwert, für die die Querdynamik des Fahrzeuges beschreibende Größe verglichen wird. Für den Fall, bei dem die die Querdynamik des Fahrzeuges beschreibende Größe größer als der oder gleich dem charakteristischen Wert ist, werden wenigstens Bremseneingriffe an wenigstens einem Rad und/oder Motoreingriffe und/oder Retardereingriffe durchgeführt. Diese Bremseneingriffe und/oder Motoreingriffe und/oder Retardereingriffe werden dabei vorteilhafterweise so durchgeführt, daß die Geschwindigkeit des Fahrzeuges auf einen vorgebbaren Geschwindigkeitswert reduziert oder auf einem vorgebbaren Geschwindigkeitswert gehalten wird.

Dadurch daß durch die Bremseneingriffe und/oder durch die Motoreingriffe und/oder durch die Retardereingriffe die Geschwindigkeit des Fahrzeuges auf einen vorgebbaren Geschwindigkeitswert reduziert oder auf einem vorgebbaren Geschwindigkeitswert gehalten wird, wird für das Fahrzeug in querdynamisch kritischen Situationen ein definierter Zustand eingestellt. Dieser definierte Zustand kann beispielsweise einer Kurvenfahrt mit maximal möglicher Kurvengeschwindigkeit entsprechen. In diesem Fall entspricht der vorgebbare Geschwindigkeitswert der maximal möglichen Kurvengeschwindigkeit.

Nachfolgend wird die Geschwindigkeit des Fahrzeuges als Fahrzeuggeschwindigkeit bezeichnet. An dieser Stelle sei noch bemerkt, wie die Formulierung "eine in Längsrichtung des Fahrzeuges orientierte Fahrzeugachse" zu verstehen ist: Zum einen kann es sich bei der Fahrzeugachse, um die eine Kipptendenz des Fahrzeuges auftritt, um die eigentliche Fahrzeuglängsachse handeln. Zum anderen kann es sich um eine Fahrzeugachse handeln, die um einen gewissen Winkel gegenüber der eigentlichen Fahrzeuglängsachse verdreht ist. Dabei ist es unerheblich, ob die verdrehte Fahrzeugachse durch den Schwerpunkt des Fahrzeuges geht oder nicht. Der Fall der verdrehten Fahrzeugachse soll auch solch eine Orientierung der Fahrzeugachse zulassen, bei der die Fahrzeugachse entweder einer Diagonalachse des Fahrzeuges oder einer zu dieser parallelen Achse entspricht.

Für den charakteristischen Wert wird vorteilhafterweise der Wert der die Querdynamik des Fahrzeuges beschreibenden Größe verwendet, der für das Fahrzeug zulässig ist, ohne daß das Fahrzeug bei Erreichen dieses Wertes instabil wird. Unter instabil werden wird hierbei beginnendes Schleudern bzw. Kippen des Fahrzeuges verstanden.

Der charakteristische Wert ist entweder ein fest vorgegebener Wert oder ein für den jeweiligen Fahrzustand des Fahrzeuges ermittelter Wert. Der fest vorgegebene Wert wird beispielsweise im Vorfeld durch Fahrversuche und dem sich dabei ergebenden Fahrzeugverhalten, und unterstützt durch Simulationen, ermittelt. Bei diesem charakteristischen Wert ist davon auszugehen, daß sich das Fahrzeug in entsprechenden Betriebszuständen, in denen dieser Wert erreicht wird, stabil verhält. Oder der charakteristische Wert wird für den jeweiligen Fahrzustand des Fahrzeuges ermittelt. D.h. der charakteristische Wert wird während des Fahrbetriebes des Fahrzeuges ausgehend von für diesen Fahrbetrieb ermittelten Größen ermittelt.

Vorteilhafterweise wird der charakteristische Wert wenigstens in Abhängigkeit einer die Radlast wenigstens eines Rades beschreibenden Größe ermittelt. Als die die Radlast des wenigstens einen Rades beschreibende Größe wird vorteilhafterweise eine die Aufstandskraft des jeweiligen Rades beschreibende Größe verwendet. Diese Größe ist für gewöhnlich in Schlupfregelsystemen verfügbar.

Zur Ermittlung des charakteristischen Wertes bieten sich zwei Alternativen an. Zum einen wird der charakteristische Wert in Abhängigkeit der Radlast wenigstens eines kurveninneren Rades und der die Querdynamik des Fahrzeuges beschreibenden Größe ermittelt. Wird, wie bereits erwähnt, als die die Radlast beschreibende Größe die Aufstandskraft des jeweiligen Rades verwendet, so wird zur Ermittlung des charakteristischen Wertes ein linearer Zusammenhang zwischen der die Querdynamik des Fahrzeuges beschreibenden Größe und der Aufstandskraft approximiert. Der charakteristische Wert ergibt sich dann durch Interpolation, d.h. der charakteristische Wert entspricht dem Wert der die Querdynamik beschreibenden Größe, bei dem die Aufstandskraft Null wird.

Diese Vorgehensweise nutzt aus, daß sich in querdynamisch kritischen Situationen die Instabilität eines Fahrzeuges zuerst im Radverhalten bemerkbar macht. D.h. man erhält durch diese Art der Ermittlung rechtzeitig ein präzises Maß für die in der entsprechenden Situation maximal zulässige Querdynamik des Fahrzeuges. Da sich in querdynamisch kritischen Situationen eine drohende Instabilität zuerst an den kurveninneren Rädern des Fahrzeuges zeigt, wird der charakteristische Wert vorteilhafterweise in Abhängigkeit einer die Radlast eines kurveninneren Rades beschreibenden Größe ermittelt.

Bei der zweiten Alternative wird in Abhängigkeit der die Radlasten beschreibenden Größen eine die Masse des Fahrzeuges beschreibende Größe ermittelt. Der charakteristische Wert wird dann mit Hilfe der die Masse des Fahrzeuges beschreibenden Größe aus einem Kennfeld ausgelesen. Die einzelnen Werte des Kennfeldes lassen sich ebenfalls im Vorfeld durch Fahrversuche, unterstützt von Simulationen, ermitteln. Die Fahrzeugmasse wird deshalb als Parameter verwendet, da die Fahrzeugmasse die Schwerpunkthöhe des Fahrzeuges beeinflußt, die wiederum das Kippverhalten des Fahrzeuges und somit die maximal zulässige Querbeschleunigung bei einer Kurvenfahrt beeinflußt.

Die beiden zuletzt genannten Vorgehensweise haben den Vorteil, daß in jeder querdynamisch kritischen Situation - hierbei handelt es sich insbesondere um Kurvenfahrten mit hoher Geschwindigkeit - der jeweils maximal zulässige Wert für die die Querdynamik des Fahrzeuges beschreibende Größe vorliegt, und somit das Fahrzeug durch Bremseneingriffe und/oder durch Motoreingriffe und/oder durch Retardereingriffe, der jeweiligen Fahrsituation entsprechend, optimal stabilisiert werden kann.

Wie aus den vorstehenden Ausführungen hervorgeht, hat der charakteristische Wert die Funktion eines Grenzwertes.

Vorteilhafterweise handelt es sich im Rahmen der vorstehend erwähnten gezielten Reduzierung der Fahrzeuggeschwindigkeit bei dem vorgebbaren Geschwindigkeitswert entweder um einen fest vorgegebenen Wert, der beispielsweise in entsprechender Weise, wie der charakteristische Wert für die die Querdynamik des Fahrzeuges beschreibende Größe, im Vorfeld durch Fahrversuche und mit Hilfe von Simulationen ermittelt wurde. Oder der vorgebbare Geschwindigkeitswert wird in entsprechender Weise wie der charakteristische Wert mit Hilfe eines Kennfeldes ermittelt. Oder aber der vorgebbare Geschwindigkeitswert wird während des Betriebes des Fahrzeuges wenigstens in Abhängigkeit des charakteristischen Wertes und/oder einer die Gierrate des Fahrzeuges beschreibenden Größe ermittelt. Die beiden letztgenannten Vorgehensweisen haben den Vorteil, daß in jeder querdynamisch kritischen Situation der jeweils maximal zulässige Wert für die Fahrzeuggeschwindigkeit vorliegt, und somit das Fahrzeug durch Bremseneingriffe und/oder durch Motoreingriffe und/oder durch Retardereingriffe, der jeweiligen Fahrsituation entsprechend, optimal stabilisiert werden kann. Außerdem wird auf diese Art und Weise ein Geschwindigkeitswert ermittelt, der in der entsprechenden querdynamisch kritischen Fahrsituation die in dieser Fahrsituation maximal zulässige Fahrzeuggeschwindigkeit darstellt. Daraus ergibt sich der weitere Vorteil, daß das Fahrzeug nicht in unnötigem Maße abgebremst wird. Das Fahrzeug kann mit der maximal möglichen Geschwindigkeit fahren, der Verkehrsfluß bleibt weitestgehend erhalten.

An dieser Stelle sei nochmals zusammengefaßt: Die Reduzierung der Fahrzeuggeschwindigkeit wird durch Beobachtung der Querdynamik des Fahrzeuges eingeleitet. Dabei wird die Geschwindigkeit des Fahrzeuges auf einen Wert reduziert, der durch die Querdynamik des Fahrzeuges bestimmt ist. Dieser Wert wird entweder während des Fahrbetriebes des Fahrzeuges ermittelt oder es handelt sich um einen vorgegebenen Wert. In beiden Fällen können im Vorfeld durchgeführte Fahrversuche bzw. Simulationen zugrunde liegen.

Die Bremseneingriffe und/oder Motoreingriffe und/oder Retardereingriffe werden vorzugsweise solange durchgeführt, wie der vorgebbare Geschwindigkeitswert kleiner als eine die Fahrzeuggeschwindigkeit beschreibende Größe ist.

Als die die Querdynamik des Fahrzeuges beschreibende Größe wird vorteilhafterweise eine die Querbeschleunigung des Fahrzeuges beschreibende Größe verwendet. Allerdings wird im erfindungsgemäßen Verfahren die die Querdynamik des Fahrzeuges beschreibende Größe nicht direkt mit Hilfe eines entsprechenden Sensormittels gemessen. Sondern sie wird wenigstens in Abhängigkeit einer die Fahrzeuggeschwindigkeit beschreibenden Größe ermittelt. Ferner wird die die Querdynamik des Fahrzeuges beschreibende Größe in Abhängigkeit einer die Gierrate des Fahrzeuges beschreibenden Größe ermittelt, wobei die die Gierrate des Fahrzeuges beschreibende Größe wiederum wenigstens in Abhängigkeit der die Fahrzeuggeschwindigkeit beschreibenden Größe und einer den Lenkwinkel des Fahrzeuges beschreibenden Größe ermittelt wird. D.h. letztenendes wird die die Querbeschleunigung des Fahrzeuges beschreibende Größe in Abhängigkeit der Fahrzeuggeschwindigkeit und des Lenkwinkels ermittelt.

Diese Vorgehensweise bei der Ermittlung der die Querbeschleunigung beschreibenden Größe ist mit einem deutlichen Zeitvorteil, was die Bereitstellung des Signals dieser Größe angeht, verbunden. Dies kann wie folgt erklärt werden: Für gewöhnlich wird eine Kurvenfahrt durch Einstellen eines Lenkwinkels eingeleitet. Aufgrund dieser Kurvenfahrt ergibt sich eine entsprechende Querbeschleunigung. Wird diese sich ergebende Querbeschleunigung mit Hilfe eines Querbeschleunigungssensors erfaßt, so vergeht eine geraume Zeit zwischen Einstellen des Lenkwinkels und Bereitstellen des Querbeschleunigungssignals durch den Querbeschleunigungssensor. Dies ist unter anderem durch die zeitliche Abfolge zwischen Einstellung des Lenkwinkels und dem daraus resultierenden Aufbau der Querbeschleunigung und zum anderen auch durch die Trägheit des Querbeschleunigungssensors bedingt. Aufgrund der vorstehend beschriebenen Vorgehensweise bei der Ermittlung der die Querbeschleunigung beschreibenden Größe wird dieser Zeitversatz weitestgehend eliminiert, d.h. es liegt unmittelbar nach Einstellen des Lenkwinkels der Wert der Querbeschleunigung vor, der sich aufgrund des Einstellen des Lenkwinkels in dem sich ergebenden stationären Zustand bzw. eingeschwungenen Zustand des Fahrzeuges einstellt. Da die erfindungsgemäße Vorrichtung bzw. das erfindungsgemäße Verfahren ein Umkippen des Fahrzeuges um eine in Längsrichtung des Fahrzeuges orientierte Fahrzeugachse vermeiden soll, ist die vorstehend beschriebene Vorgehensweise bei der Ermittlung der die Querdynamik des Fahrzeuges beschreibenden Größe, d.h. der die Querbeschleunigung beschreibenden Größe, möglich, da ein Umkippen des Fahrzeuges für üblich bei einer Kurvenfahrt vorkommt, und eine Kurvenfahrt aufgrund eines vom Fahrer des Fahrzeuges vorgegebenen Lenkwinkels durchgeführt wird.

Zusammenfassend kann festgehalten werden: Die die Querdynamik des Fahrzeuges beschreibende Größe und/oder die die Gierrate des Fahrzeuges beschreibende Größe wird vorteilhafterweise mit Hilfe einfacher mathematischer Modelle, die einen stationären Zustand des Fahrzeuges beschreiben, bestimmt. Dadurch ergibt sich der bereits vorstehend beschriebene zeitliche Verlauf.

Durch die vorstehend beschriebenen Bremseneingriffe werden vorteilhafterweise alle Räder des Fahrzeuges gleichmäßig gebremst. Unter gleichmäßig bremsen soll verstanden werden, daß von vornherein nicht bewußt unterschiedliche Bremskräfte eingestellt werden. Alternativ bzw. unterstützend zu diesen Bremseneingriffen wird durch entsprechende Motoreingriffe das vom Motor abgegebene Moment reduziert. Durch diese beiden Eingriffe wird die Fahrzeuggeschwindigkeit reduziert oder auf einem vorgebbaren Geschwindigkeitswert gehalten. Es können auch solche Bremseneingriffe durchgeführt werden, bei denen wenigstens das kurveninnere Hinterrad weniger stark als die übrigen Räder des Fahrzeuges und/oder überhaupt nicht gebremst wird. Bei dieser Art von Bremseneingriffen wird eine temporäre Erhöhung der Giergeschwindigkeit während des Bremseneingriffes und somit ein daraus resultierender instabiler Zustand vermieden.

Wird letztere Art von Bremseneingriffen gewählt, so sind vorteilhafterweise an dem kurveninneren Hinterrad alle Stufen zwischen normalen Bremseneingriff und keinem Bremseneingriff möglich. Mit welcher Stufe das kurveninnere Hinterrad gebremst werden soll, kann beispielsweise in Abhängigkeit einer die Querdynamik des Fahrzeuges beschreibenden Größe festgelegt werden.

Alternativ zu der bisher beschriebenen Vorgehensweise wird der charakteristische Wert um einen kleinen Wert vermindert. Die die Querdynamik des Fahrzeuges beschreibende Größe wird mit dem verminderten charakteristischen Wert verglichen. Für den Fall, bei dem die die Querdynamik des Fahrzeuges beschreibende Größe größer als der verminderte charakteristische Wert ist, wird wenigstens durch Bremseneingriffe an wenigstens einem Rad und/oder durch Motoreingriffe und/oder durch Retardereingriffe, die Geschwindigkeit des Fahrzeuges auf einen vorgebbaren Geschwindigkeitswert reduziert. Durch diese Vorgehensweise wird erreicht, daß die Fahrzeuggeschwindigkeit nicht erst dann reduziert wird, wenn der charakteristische Wert erreicht ist, sondern zeitlich schon etwas früher, nämlich dann, wenn sich das Fahrzeug an den durch den charakteristischen Wert beschriebenen querdynamisch kritischen Fahrzustand annähert.

Weitere Vorteile sowie vorteilhafte Ausgestaltungen können den Unteransprüchen, der Zeichnung und der Beschreibung des Ausführungsbeispiels entnommen werden.

Zeichnung

Die Zeichnung besteht aus den Figuren 1 bis 3. Die Figuren 1a und 1b zeigen verschiedene Straßenfahrzeuge, bei denen das erfindungsgemäße Verfahren eingesetzt wird. Figur 2 zeigt in einer Übersichtsanordnung die erfindungsgemäße Vorrichtung zur Durchführung des erfindungsgemäßen Verfahrens. Figur 3 zeigt mit Hilfe eines Ablaufdiagramms eine Ausführungsform zur Durchführung des erfindungsgemäßen Verfahrens.

Es sei darauf hingewiesen, daß Blöcke mit derselben Bezeichnung in unterschiedlichen Figuren dieselbe Funktion haben.

Ausführungsbeispiel

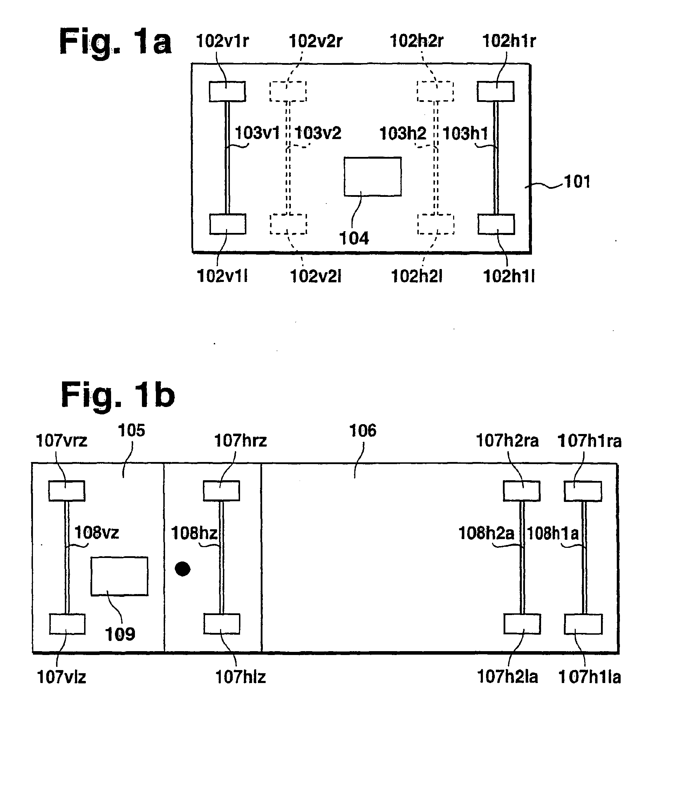

Zunächst soll auf die Figuren 1a und 1b eingegangen werden, die verschiedene Straßenfahrzeuge darstellen, bei denen das erfindungsgemäße Verfahren zum Einsatz kommen kann.

In Figur 1a ist ein einteiliges Fahrzeug 101 dargestellt. Bei diesem Fahrzeug kann es sich sowohl um einen Personenkraftwagen als auch um einen Nutzkraftwagen handeln. Dieses Fahrzeug soll wenigstens zwei Radachsen aufweisen, was durch die teilweise gestrichelte Darstellung angedeutet ist. Die Radachsen des Fahrzeuges 101 sind mit $103ix$ bezeichnet. Dabei gibt der Index i an, ob es sich um eine Vorderachse (v) oder um eine Hinterachse (h) handelt. Durch den Index x wird bei Fahrzeugen mit mehr als zwei Achsen angegeben, um welche der Vorder- bzw. Hinterachsen es sich handelt. Dabei gilt folgende Zuordnung: Der Vorderachse bzw. der Hinterachse, die der Fahrzeugberandung am nächsten ist, ist jeweils der Index x mit dem kleinsten Wert zugeordnet ist. Je weiter die jeweilige Radachse von der Fahrzeugberandung entfernt ist, desto größer ist der Wert des zugehörigen Index x. Den Radachsen $103ix$ sind die Räder $102ixj$ zugeordnet. Die Bedeutung der Indizes i bzw. x entspricht der vorstehend beschriebenen. Mit dem Index j wird angezeigt, ob sich das Rad auf der rechten (r) bzw. auf der linken (1) Fahrzeugseite befindet. Bei der Darstellung der Räder $102ixj$ wurde auf die Unterscheidung zwischen Einzelrädern bzw. Zwillingsrädern verzichtet. Ferner enthält das Fahrzeug 101 ein Steuergerät 104, in welchem die erfindungsgemäße Vorrichtung zur Durchführung des erfindungsgemäßen Verfahrens implementiert ist.

In Figur 1b ist eine Fahrzeugkombination, bestehend aus einer Zugmaschine 105 und einem Auflieger 106 dargestellt. Die gewählte Darstellung soll keine Einschränkung darstellen, denkbar ist auch eine Fahrzeugkombination, die aus einer Zugmaschine und einem Deichselanhänger besteht. Die Zugmaschine 105 soll die Radachsen $108iz$ aufweisen. Den Radachsen $108iz$ sind Räder $107ijz$ zugeordnet. Die Bedeutung der Indizes i bzw. j entspricht der vorstehend beschriebenen. Der Index z gibt an, daß es sich um Radachsen bzw. Räder der Zugmaschine handelt. Ferner weist die Zugmaschine 105 ein Steuergerät 109 auf, in dem das erfindungsgemäße Verfahren abläuft und mit dem sowohl die Zugmaschine 105 als auch der Auflieger 106 stabilisiert wird. Der Auflieger 106 soll zwei Radachsen $108ixa$ enthalten. Den beiden Radachsen $108ixa$ sind in entsprechender Weise die Räder $107ixja$ zugewiesen. Der Index a gibt an, daß es sich um Komponenten des Aufliegers 106 handelt. Die in Figur 1b dargestellte Anzahl von Radachsen für die Zugmaschine 105 bzw. für den Auflieger 106 soll keine Einschränkung darstellen. Das Steuergerät 109 kann anstelle in der Zugmaschine 105 auch im Auflieger 106 angeordnet sein. Ferner ist es denkbar, sowohl das Zugfahrzeug 105 als auch den Auflieger 106 mit jeweils einem Steuergerät auszustatten.

Die in den Figuren 1a und 1b gewählte Kennzeichnung durch die Indizes a, i, j, x sowie z ist für sämtliche Größen bzw. Komponenten, bei denen sie Verwendung findet, entsprechend.

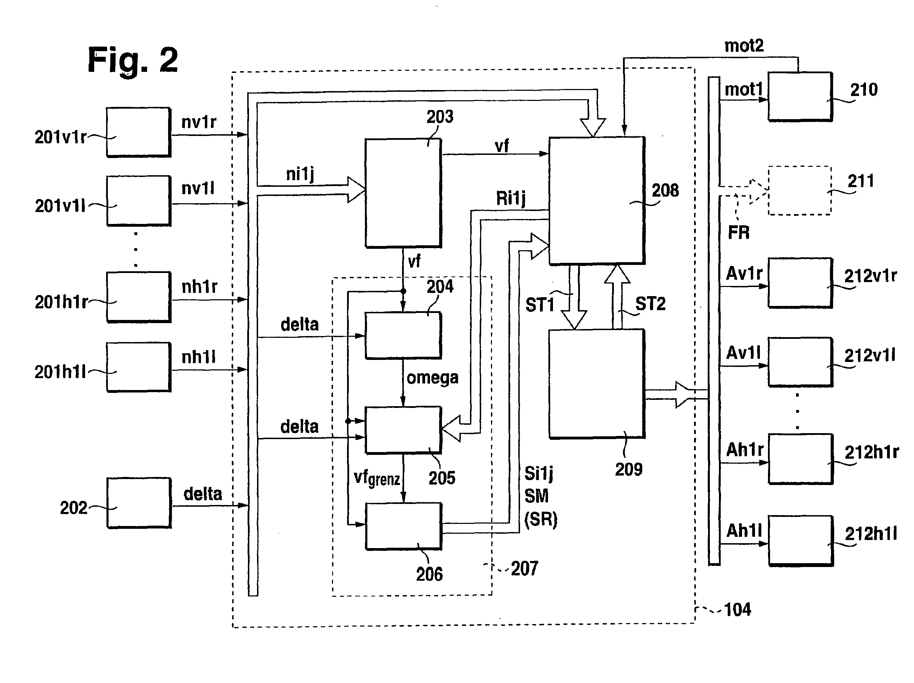

Nachfolgend soll auf Figur 2 eingegangen werden.

Der Figur 2 liegt ein einteiliges Fahrzeug zugrunde, wie es beispielsweise in Figur 1a dargestellt ist. Aus diesem Grund ist in Figur 2 das Steuergerät 104 enthalten. Diese Darstellung soll allerdings nicht einschränkend wirken, da der Gegenstand der Erfindung in entsprechender Weise auch für ein Fahrzeug, wie es in Figur 1b dargestellt ist, anwendbar ist. Hierzu sind ausgehend von Figur 2 eventuell entsprechende Modifikationen erforderlich.

Es sei angenommen, daß das einteilige Fahrzeug wenigstens zwei Radachsen $103ix$, eine Vorderachse $103v1$ mit den Rädern $102v1r$ bzw. $102v11$ sowie eine Hinterachse $103h1$ mit den Rädern $102h1r$ bzw. $102h11$ aufweist. Die zu diesen Rädern gehörenden Raddrehzahlsensoren $201i1j$ sind in Figur 2 dargestellt. Je nach Anzahl der Radachsen des einteiligen Fahrzeuges kommen, wie in Figur 2 angedeutet, weitere Raddrehzahlsensoren $201ixj$ hinzu. Mit den Raddrehzahlsensoren $201ilj$ werden Größen $nilj$ ermittelt, die jeweils die Raddrehzahl des entsprechenden Rades $102ilj$ beschreiben. Die Größen $nilj$ werden Blöcken 203 und 208 zugeführt. Die Raddrehzahlsensoren $201ilj$ sind unabhängig von der Art des Reglers 209 auf jeden Fall vorhanden.

Durch die Auswahl eines einachsigen Fahrzeuges im Ausführungsbeispiel soll die erfindungswesentliche Idee nicht eingeschränkt werden, sie ist auch für mehrachsige Fahrzeuge (der Index x weist dann einen von 1 verschiedenen Wert auf) bzw. für Fahrzeuggespanne einsetzbar.

Ferner enthält das Fahrzeug einen Sensor 202 mit dem eine den Lenkwinkel beschreibende Größe delta ermittelt wird. Diese Größe delta wird den Blöcken 204, 205 sowie 208 zugeführt.

Im Block 203 wird in bekannter Weise aus den Raddrehzahlen ni1j eine die Geschwindigkeit des Fahrzeuges beschreibende Größe vf ermittelt, die den Blöcken 204, 205, 206 und 208 zugeführt wird.

Im Block 204 wird ausgehend von den ihm zugeführten Größen vf und delta eine die Gierrate des Fahrzeuges beschreibende Größe omega ermittelt. Die Größe omega wird mit Hilfe eines einfachen mathematischen Modells, in welches die Größen vf und delta eingehen, ermittelt. Dieses mathematische Modell wird beispielsweise durch die Gleichung

$$omega = \frac{vf}{l + EG \cdot vf^2} \cdot delta \tag{1}$$

beschreiben. Mit Hilfe dieses mathematischen Modells kann der Wert der Gierrate des Fahrzeuges für einen stationären Zustand des Fahrzeuges, wie er sich durch Vorgabe des Lenkwinkels einstellen wird, bestimmt werden. In der oben aufgeführten Gleichung beschreibt die Größe 1 den Radabstand des Fahrzeuges, die Größe EG beschreibt den Eigenlenkgradienten des Fahrzeuges, eine für das jeweilige Fahrzeug charakteristische Größe. Die Größe omega wird ausgehend vom Block 204 dem Block 205 zugeführt.

Im Block 205 werden zum einen intern in ihm verarbeitete Größen und Größen, die extern, d.h. in anderen Blöcken verarbeitet werden, ermittelt. Als interne Größen werden im Block 205 eine die Querdynamik des Fahrzeuges beschreibende Größe aq und ein charakteristischer Wert aqgrenz für diese die Querdynamik des Fahrzeuges beschreibende Größe ermittelt. Gegebenenfalls wird im Block 205 auch eine die Masse des Fahrzeuges beschreibende Größe ermittelt. Als externe Größe wird im Block 206 ein vorgebbarer Geschwindigkeitswert vfgrenz ermittelt, der dem Block 206 zugeführt wird.

Als die die Querdynamik des Fahrzeuges beschreibende Größe wird eine die Querbeschleunigung des Fahrzeuges beschreibende Größe aq verwendet. Die Größe aq wird in Abhängigkeit der dem Block 205 zugeführten Größen vf sowie omega beispielsweise unter Verwendung der Beziehung

$$aq = vf \cdot omega \tag{2}$$

ermittelt. Diese Beziehung beschreibt ebenfalls einen stationären Zustand des Fahrzeuges.

Setzt man Gleichung (1) in Gleichung (2) ein, so erkennt man, daß sich die die Querdynamik des Fahrzeuges beschreibende Größe wenigstens in Abhängigkeit der Fahrzeuggeschwindigkeit vf und der Lenkwinkelgröße delta ergibt.

Der charakteristische Wert aqgrenz wird wenigstens in Abhängigkeit einer die Radlast wenigstens eines Rades beschreibenden Größe ermittelt. Hierzu werden dem Block 205 ausgehend vom Block 208 Größen Rilj, die die Radlast der einzelnen Räder beschreiben, zugeführt. Als Größen Rilj werden beispielsweise die an den Rädern jeweils vorliegenden Aufstands- bzw. Normalkräfte verwendet. Diese Kräfte werden im Block 208 in bekannter Weise wenigstens in Abhängigkeit der Raddrehzahlen nilj ermittelt.

Es bietet sich an, die charakteristische Größe in Abhängigkeit der Radlast wenigstens eines kurveninneren Rades und der die Querdynamik des Fahrzeuges beschreibenden Größe zu ermitteln. Hierzu werden im Block 205 zunächst, beispielsweise in Abhängigkeit der ihm zugeführten Größe delta, die kurveninneren Räder ermittelt. In Abhängigkeit der die Querdynamik des Fahrzeuges beschreibenden Größe, d.h. der die Querbeschleunigung des Fahrzeuges beschreibenden Größe, und einer der Größen Ri1j eines kurveninneren Rades, wird ein linearer Zusammenhang für die Größe Ri1j in Abhängigkeit der die Querbeschleunigung beschreibenden Größe approximiert. Mit Hilfe dieses linearen Zusammenhanges wird der charakteristische Wert durch Interpolation ermittelt. Der Interpolation liegt dabei zugrunde, daß der charakteristische Wert dann vorliegt, wenn die Größe Rilj nahe am Wert Null ist oder alternativ diesen Wert einnimmt.

Alternativ kann der charakteristische Wert aqgrenz in Abhängigkeit einer die Masse des Fahrzeuges beschreibenden Größe aus einem Kennfeld ausgelesen werden. Hierzu wird im Block 205 zunächst eine die Masse des Fahrzeuges beschreibende Größe in Abhängigkeit der die Radlasten beschreibenden Größen ermittelt. Alternativ zur Ermittlung der Fahrzeugmasse aus den die Radlasten beschreibenden Größen kann die Fahrzeugmasse auch ausgehend von Motordaten ermittelt werden. Oder aber es handelt sich bei dem charakteristischen Wert um einen fest vorgegebenen Wert, der im Block 205 abgelegt ist.

In Abhängigkeit des charakteristischen Wertes aqgrenz und der die Gierrate beschreibenden Größe omega wird unter Verwendung der Beziehung

$$vfgrenz = \frac{aqgrenz}{omega} \qquad\qquad (3)$$

der vorgebbare Geschwindigkeitswert vfgrenz ermittelt. Dieser Geschwindigkeitswert vfgrenz stellt die Geschwindigkeit dar, die in der durch den charakteristischen Wert aqgrenz beschriebenen Fahrsituation gerade noch fahrbar ist, ohne daß dabei das Fahrzeug instabil wird. Alternativ kann für den vorgebbaren Geschwindigkeitswert auch ein fest vorgegebener Wert, der im Block 205 abgelegt ist, verwendet werden. Oder der vorgebbare Geschwindigkeitswert wird mit Hilfe eines Kennfeldes ermittelt. Der Geschwindigkeitswert vfgrenz wird ausgehend vom Block 205 dem Block 206 zugeführt.

Im Block 206 wird die Fahrzeuggeschwindigkeit vf mit dem vorgebbaren Geschwindigkeitswert vfgrenz verglichen. Solange der vorgebbare Geschwindigkeitswert kleiner als die die Fahrzeuggeschwindigkeit beschreibende Größe vf ist, werden Bremseneingriffe und/oder Motoreingriffe und/oder Retardereingriffe durchgeführt, mit denen die Fahrzeuggeschwindigkeit auf den vorgebbaren Geschwindigkeitswert reduziert wird oder mit denen sie auf dem vorgegebenen Geschwindigkeitswert gehalten wird. In Abhängigkeit dieses Vergleiches werden im Block 206 Größen Silj bzw. SM zur Durchführung der Bremseneingriffe und/oder Motoreingriffe ermittelt. Sofern das Fahrzeug über einen Retarder (Block 211) verfügt, wird im Block 206 auch eine Größe SR zur Durchführung der Retardereingriffe ermittelt (die optionale Ausstattung des Fahrzeuges ist durch die geklammerte Schreibweise der Größe SR angedeutet). Die Größen Silj bzw. SM bzw. SR (sofern gebildet) werden dem Block 208 zugeführt. Mit Hilfe der Größen Silj wird dem Regler 208 mitgeteilt, welche Räder des Fahrzeuges wie zur Stabilisierung des Fahrzeuges zu bremsen sind. Mit Hilfe der Größe SM wird dem Regler 208 mitgeteilt, in welchem Maße ein Motoreingriff zur Reduzierung des vom Motor abgegebenen Momentes durchzuführen ist. Mit der Größe SR wird dem Regler 208 mitgeteilt, in welchem Maße ein Retardereingriff durchzuführen ist.

An dieser Stelle sei bemerkt, daß in Figur 2 die erfindungswesentlichen Blöcke zum Block 207 zusammengefaßt sind.

Mit 208 ist der im Steuergerät 104 implementierte Regler bzw. Fahrzeugregler bezeichnet. Bei dem Regler 208 handelt es sich in allgemeiner Weise um einen Schlupfregler. Dabei kann dieser Schlupfregler beispielsweise als Bremsschlupfregler und/oder als Antriebsschlupfregler ausgelegt sein. Alternativ kann es sich bei dem Schlupfregler auch um einen Regler handeln, der in seiner Grundfunktion eine die Fahrdynamik des Fahrzeuges beschreibende Größe, beispielsweise eine von der Querbeschleunigung und/oder der Gierrate des Fahrzeuges abhängige Größe, durch Eingriffe in die Radbremsen und/oder in den Motor regelt. An dieser Stelle sei auf die in der Automobiltechnischen Zeitschrift (ATZ) 96, 1994, Heft 11, auf den Seiten 674 bis 689 erschienene Veröffentlichung "FDR - Die Fahrdynamikregelung von Bosch" verwiesen, in der ein System zur Regelung einer die Fahrdynamik des Fahrzeuges beschreibenden Größe beschrieben ist.

An dieser Stelle sei bemerkt, daß in Figur 2 lediglich die Sensorik dargestellt ist, die zur Durchführung des erfindungsgemäßen Verfahrens unbedingt erforderlich ist. Ein Teil dieser Sensorik, nämlich die Raddrehzahlsensoren 201i1j, ist auf jeden Fall auch für die Realisierung eines Schlupfreglers erforderlich. Je nachdem, welche Art von Schlupfregler mit dem Block 208 realisiert werden soll, sind gegebenenfalls weitere Sensoren erforderlich. Soll es sich beispielsweise um einen Schlupfregler zur Regelung einer die Fahrdynamik des Fahrzeuges beschreibenden Größe handeln, so sind für gewöhnlich ein Lenkwinkelsensor, ein Querbeschleunigungssensor sowie ein Gierratensensor erforderlich. An dieser Stelle sei auf die vorstehend erwähnte Veröffentlichung "FDR - Die Fahrdynamikregelung von Bosch" verwiesen, in der besagte Systeme ausführlich beschrieben sind. Für den Fall, daß ein Querbeschleunigungssensor und/oder ein Gierratensensor vorhanden ist, können die Querbeschleunigung und/oder die Gierrate auch gemessen werden. Die gemessenen Größen werden dann anstelle der berechneten Größen verwendet. Allerdings ist dann die oben beschriebene, vom Lenkwinkelsensor ausgehende Preview-Funktion nicht mehr gewährleistet.

Da es sich bei dem Block 208 um einen Schlupfregler handeln soll, basiert die in ihm in ihrer Grundfunktion stattfindende Regelung in bekannter Weise auf den dem Block 208 zugeführten Größen ni1j und vf, die zur Ermittlung der jeweils an den Rädern vorliegenden Schlupfwerte verwendet werden. Ferner wird dem Block 208, ausgehend vom Motor 210, eine Größe mot2 zugeführt, die beispielsweise die Motordrehzahl des Motors 210 beschreibt, und die im Block 208 für die Durchführung der Motoreingriffe erforderlich ist. Außerdem werden dem Block 208 Größen ST2 zugeführt, die in einem Block 209 erzeugt werden, der die Ansteuerlogik für die im Fahrzeug enthaltenen Aktuatoren und den Motor und sofern vorhanden auch für den Retarder darstellt. Durch die Größen ST2 wird dem Regler mitgeteilt, welche Aktuatoren momentan wie angesteuert sind bzw. wie der Retarder angesteuert ist. Ausgehend von diesen vorstehend aufgeführten Größen ermittelt der Regler 208 Größen ST1g, die der Ansteuerlogik 209 als Größen ST1 zugeführt werden, und in deren Abhängigkeit der Motor 210 bzw. die Aktuatoren 212ilj zur Realisierung der im Regler 208 als Grundfunktion implementierten Schlupfregelung angesteuert werden. D.h. mit den Größen ST1 wird der Ansteuerlogik 209 mitgeteilt, welche Aktuatoren wie bzw. wie der Motor angesteuert werden sollen. Bzgl. der Erzeugung der Größen ST1g gemäß der für die Grundfunktion implementierten Regelung wird u.a. auf die vorstehend aufgeführte Veröffentlichung "FDR - die Fahrdynamikregelung von Bosch" verwiesen. Unabhängig von der Art des Schlupfreglers liegt der Regelung wie allgemein bekannt ein Vergleich von Istschlupfwerten mit vorgebbaren Sollschlupfwerten zugrunde.

Zusätzlich zu der im Block 208 in der Grundfunktion implementierten Regelung hat er die Aufgabe, das Fahrzeug zu stabilisieren bzw. ein Umkippen des Fahrzeuges zu vermeiden. Im Rahmen der Umkippvermeidung erfüllt der Regler im wesentlichen zwei Aufgaben. Zum einen setzt er die im Block 206 ermittelten Größen Silj bzw. SM bzw. SR in entsprechende Signale ST1u um, die der Ansteuerlogik 209 als Größen ST1 zugeführt werden, und ausgehend von denen an den Rädern Bremsmomente und/oder Antriebsmomente erzeugt und/oder verändert werden und/oder Retardereingriffe durchgeführt werden, um die Fahrzeuggeschwindigkeit auf einen vorgegebenen Geschwindigkeitswert zu reduzieren oder auf einem vorgegebenen Geschwindigkeitswert zu halten. Zum anderen stellt der Block 208 in vorstehend beschriebener Weise die Größen Rilj bereit.

Für die Ausgabe der Größen ST1g bzw. ST1u als Größen ST1 sind verschiedene Vorgehensweisen denkbar. Erzeugt der Regler 208 nur die Größen ST1g, so sind die ausgegebenen Größen ST1 mit diesen Größen ST1g identisch. Erzeugt der Regler sowohl die Größen ST1g als auch die Größen ST1u, so können entweder die Größen ST1u anstelle der Größen ST1g ausgegeben werden oder die Größen ST1u werden den Größen ST1g überlagert.

Um gemäß dem erfindungsgemäßen Verfahren ein Fahrzeug bei einer vorliegenden Kipptendenz um eine in Längsrichtung des Fahrzeuges orientierte Fahrzeugachse zu stabilisieren bzw. um ein drohendes Umkippen des Fahrzeuges zu vermeiden, werden durch entsprechende Bremseneingriffe alle Räder des Fahrzeuges gleichmäßig gebremst und/oder durch entsprechende Motoreingriffe das vom Motor abgegebene Moment reduziert und/oder ein Retardereingriff durchgeführt. Alternativ zur gleichmäßigen Bremsung aller Räder bietet sich an, durch entsprechende Bremseneingriffe die Räder des Fahrzeuges so zu bremsen, daß wenigstens das kurveninnere Hinterrad weniger stark als die übrigen Räder des Fahrzeuges und/oder überhaupt nicht gebremst wird. Dies hat die im Kapitel Vorteile der Erfindung beschriebenen Vorteile.

An dieser Stelle soll der im Zusammenhang mit dem Bremseneingriff verwendete Begriff gleichmäßig erläutert werden. Unter gleichmäßiger Bremsung soll verstanden werden, daß für alle Räder der selbe Bremsdruck eingespeist wird. Dabei kann der Bremsdruck an den Rädern solange gesteigert werden, bis ein Rad an die Blockiergrenze kommt. Für dieses Rad wird der Bremsdruck nicht mehr weiter gesteigert. Der Bremsdruck der anderen Räder kann weiter erhöht werden. Bei der alternativen Bremsung wird von vornherein zumindest für das kurveninnere Hinterrad schon ein anderer, nämlich ein geringerer Bremsdruck vorgesehen.

Im Block 209, der Ansteuerlogik, werden die vom Regler 208 erzeugten Größen ST1 in Ansteuersignale für den Motor 210 sowie in Ansteuersignale für die Aktuatoren des Fahrzeuges umgesetzt. Mit den Aktuatoren 212ilj ist an den entsprechenden Rädern eine Bremskraft erzeugbar. Zur Ansteuerung des Motors 210 erzeugt die Ansteuerlogik ein Signal mot1, mit dem beispielsweise die Drosselklappenstellung des Motors beeinflußbar ist. Alternativ ist auch eine Beeinflussung der dem Motor zugeführten Einspritzmenge denkbar. Zur Ansteuerung der Aktuatoren 212i1j, die insbesondere als Bremsen ausgebildet sind, erzeugt die Ansteuerlogik 209 Signale Ailj, mit denen die von den Aktuatoren 212i1j an den entsprechenden Rädern erzeugten Bremskräfte beeinflußbar sind. Ferner erzeugt die Ansteuerlogik 209 die bereits oben erwähnten Größen ST2.

Sofern das Fahrzeug über einen Retarder 211 verfügt, kann die Ansteuerlogik zusätzlich ein Signal FR erzeugen, mit dem der Retarder angesteuert wird. Ferner ist auch denkbar, daß das Fahrzeug mit Fahrwerksaktuatoren zur Beeinflussung des Fahrwerks des Fahrzeuges ausgestattet ist.

Bei der in Figur 2 zum Einsatz kommenden Bremsanlage kann es sich um eine hydraulische oder pneumatische oder elektrohydraulische oder elektropneumatische oder eine elektromotorische Bremsanlage handeln.

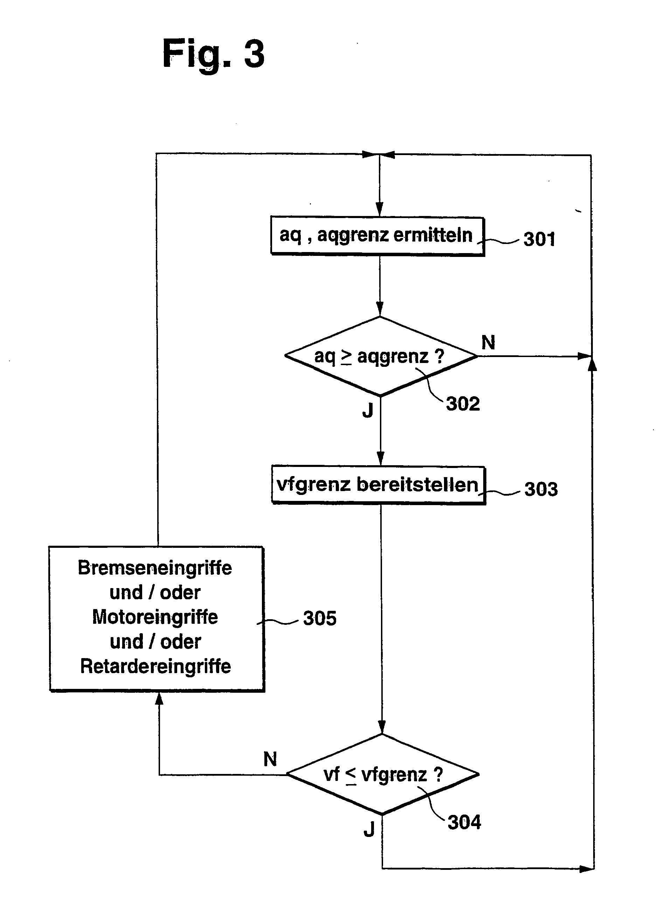

In Figur 3 wird mit Hilfe eines Flußdiagrammes das in der erfindungsgemäßen Vorrichtung ablaufende erfindungsgemäße Verfahren dargestellt.

Das erfindungsgemäße Verfahren beginnt mit einem Schritt 301. In diesem Schritt werden die Größe aq bzw. aqgrenz ermittelt. An dieser Stelle sei auf die Beschreibung des in Figur 2 enthaltenen Blockes 205 verwiesen, in dem diese Größe ermittelt werden. Anschließend an den Schritt 301 wird ein Schritt 302 ausgeführt. Im Schritt 302 wird die Größe aq mit dem charakteristischen Wert aqgrenz verglichen. Wird im Schritt 302 festgestellt, daß die Größe aq kleiner als der charakteristische Wert aqgrenz ist, was gleichbedeutend damit ist, daß sich das Fahrzeug nicht in einem querdynamisch kritischen Fahrzustand befindet, so wird anschließend an den Schritt 302 erneut der Schritt 301 ausgeführt. Wird dagegen im Schritt 302 festgestellt, daß die Größe aq größer als oder gleich der Größe aqgrenz ist, was gleichbedeutend damit ist, daß sich das Fahrzeug in einem querdynamisch kritischen Zustand befindet, so wird anschließend an den Schritt 302 ein Schritt 303 ausgeführt.

Im Schritt 303 wird die Größe vfgrenz bereitgestellt. An dieser Stelle sei ebenfalls auf die Beschreibung des Blockes 205 verwiesen. Im Anschluß an den Schritt 303 wird ein Schritt 304 ausgeführt.

Im Schritt 304 wird die die Geschwindigkeit des Fahrzeuges beschreibende Größe vf mit dem vorgebbaren Geschwindigkeitswert vfgrenz verglichen. Wird im Schritt 304 festgestellt, daß die Größe vf kleiner als oder gleich der Größe vfgrenz ist, was gleichbedeutend damit ist, daß das Fahrzeug eine Geschwindigkeit aufweist, bei der keine Umkippgefahr droht, so wird anschließend an der Schritt 304 erneut der Schritt 301 ausgeführt. Wird dagegen im Schritt 304 festgestellt, daß die Größe vf größer als die Größe vfgrenz ist, was gleichbedeutend damit ist, daß das Fahrzeug eine Geschwindigkeit aufweist, bei der eine Umkippgefahr droht, so wird anschließend an den Schritt 304 ein Schritt 305 ausgeführt.

Im Schritt 305 werden die vorstehend beschriebenen Bremseneingriffe und/oder Motoreingriffe und/oder Retardereingriffe zur Reduzierung der Fahrzeuggeschwindigkeit durchgeführt. Die in diesem Zusammenhang im Block 206 erzeugten Signale und/oder Größen Silj bzw. SM bzw. SR sind in Figur 3 nicht dargestellt. Anschließend an den Schritt 305 wird erneut der Schritt 301 ausgeführt. Da mit jedem Bremseneingriff und/oder Motoreingriff und/oder Retardereingriff das Fahrzeug verzögert wird und somit die Querbeschleunigung aq des Fahrzeuges reduziert wird, wird die Querbeschleunigung im Schritt 301 erneut ermittelt und in dem sich anschließenden Schritt 302 überprüft, ob die querdynamisch kritische Situation des Fahrzeuges noch vorliegt. Durch wiederholtes Durchlaufen der 301 bis 305 ergibt sich eine Reduzierung der Fahrzeuggeschwindigkeit.

Eine alternative Ausgestaltung könnte darin bestehen, daß anschließend an den Schritt 305 nicht auf den Schritt 301 sondern auf den Schritt 304 zurückgesprungen wird. Dadurch wird erreicht, daß die Fahrzeuggeschwindigkeit solange reduziert wird, bis die im Schritt 304 stattfindende Abfrage erfüllt ist und somit für das Fahrzeug keine Kippgefahr mehr besteht.

Abschließend sei bemerkt, daß die in der Beschreibung gewählte Form des Ausführungsbeispiels sowie die in den Figuren gewählte Darstellung keine einschränkende Wirkung auf die erfindungswesentliche Idee darstellen soll.

**Patentansprüche**

1. Verfahren zur Stabilisierung eines Fahrzeuges, insbesondere zur Vermeidung des Umkippens eines Fahrzeuges um eine in Längsrichtung des Fahrzeuges orientierte Fahrzeugachse, bei dem eine die Querdynamik des Fahrzeuges beschreibende Größe (aq) ermittelt wird, bei dem die die Querdynamik des Fahrzeuges beschreibende Größe mit wenigstens einem charakteristischen Wert (aqgrenz), insbesondere einem Schwellenwert, für die die Querdynamik des Fahrzeuges beschreibende Größe verglichen wird,

   **dadurch gekennzeichnet,**

   **daß** für den Fall, bei dem die die Querdynamik des Fahrzeuges beschreibende Größe größer als der oder gleich dem charakteristischen Wert ist, wenigstens durch Bremseneingriffe (Sixj) an wenigstens einem Rad und/oder durch Motoreingriffe (SM) und/oder durch Retardereingriffe (SR) die Geschwindigkeit des Fahrzeuges auf einen vorgebbaren Geschwindigkeitswert (vfgrenz) reduziert oder auf einem vorgebbaren Geschwindigkeitswert gehalten wird.

2. Verfahren nach Anspruch 1, **dadurch gekennzeichnet,**

   **daß** die die Querdynamik des Fahrzeuges beschreibende Größe, insbesondere wird hierfür eine die Querbeschleunigung des Fahrzeuges beschreibende Größe verwendet, wenigstens in Abhängigkeit einer die Geschwindigkeit des Fahrzeuges beschreibenden Größe (vf) ermittelt wird.

3. Verfahren nach Anspruch 2, **dadurch gekennzeichnet,**

   **daß** die die Querdynamik des Fahrzeuges beschreibende Größe ferner in Abhängigkeit einer die Gierrate des Fahrzeuges beschreibenden Größe (omega) ermittelt wird.

4. Verfahren nach Anspruch 3, **dadurch gekennzeichnet,**

   **daß** die die Gierrate des Fahrzeuges beschreibende Größe wenigstens in Abhängigkeit der die Geschwindigkeit des Fahrzeuges beschreibenden Größe und einer den Lenkwinkel des Fahrzeuges beschreibenden Größe (delta) ermittelt wird.

5. Verfahren nach Anspruch 1, **dadurch gekennzeichnet,**

   **daß** der charakteristische Wert ein fest vorgegebener Wert oder ein für den jeweiligen Fahrzustand des Fahrzeuges ermittelter Wert ist, und/oder

   **daß** für den charakteristischen Wert der Wert der die Querdynamik des Fahrzeuges beschreibenden Größe verwendet wird, der für das Fahrzeug zulässig ist, ohne daß das Fahrzeug bei Erreichen dieses Wertes instabil wird.

6. Verfahren nach Anspruch 1, **dadurch gekennzeichnet,**

   **daß** der charakteristische Wert wenigstens in Abhängigkeit einer die Radlast wenigstens eines Rades beschreibenden Größe (Rixj) ermittelt wird, insbesondere wird als die die Radlast beschreibende Größe eine die Aufstandskraft des jeweiligen Rades beschreibende Größe verwendet.

7. Verfahren nach Anspruch 6, **dadurch gekennzeichnet,**
**daß** der charakteristische Wert in Abhängigkeit der die Radlast wenigstens eines kurveninneren Rades beschreibenden Größe und der die Querdynamik des Fahrzeuges beschreibenden Größe ermittelt wird, oder
**daß** in Abhängigkeit der die Radlasten beschreibenden Größen eine die Masse des Fahrzeuges beschreibende Größe ermittelt wird und der charakteristische Wert mit Hilfe der die Masse des Fahrzeuges beschreibenden Größe aus einem Kennfeld ausgelesen wird.

8. Verfahren nach Anspruch 1, **dadurch gekennzeichnet,**
**daß** es sich bei dem vorgebbaren Geschwindigkeitswert (vfgrenz) um einen fest vorgegebenen Wert handelt, oder
daß der vorgebbare Geschwindigkeitswert wenigstens in Abhängigkeit des charakteristischen Wertes und/oder einer die Gierrate des Fahrzeuges beschreibenden Größe (omega) ermittelt wird, oder
**daß** der vorgebbare Geschwindigkeitswert mit Hilfe eines Kennfeldes ermittelt wird.

9. Verfahren nach Anspruch 1, **dadurch gekennzeichnet,**
**daß** die Bremseneingriffe und/oder Motoreingriffe und/oder Retardereingriffe solange durchgeführt werden, wie der vorgebbare Geschwindigkeitswert kleiner als eine die Fahrzeuggeschwindigkeit beschreibende Größe (vf) ist.

10. Verfahren nach Anspruch 1, **dadurch gekennzeichnet,**
**daß** durch entsprechende Bremseneingriffe alle Räder des Fahrzeuges gleichmäßig gebremst werden, oder daß durch entsprechende Bremseneingriffe die Räder des Fahrzeuges gebremst werden, wobei wenigstens das kurveninnere Hinterrad weniger stark als die übrigen Räder des Fahrzeuges und/oder überhaupt nicht gebremst wird, und/oder
**daß** durch entsprechende Motoreingriffe das vom Motor abgegebene Moment reduziert wird.

11. Verfahren nach Anspruch 1, **dadurch gekennzeichnet,**
**daß** der charakteristische Wert um einen kleinen Wert vermindert wird, wobei die die Querdynamik des Fahrzeuges beschreibende Größe mit dem verminderten charakteristischen Wert verglichen wird, wobei für den Fall, bei dem die die Querdynamik des Fahrzeuges beschreibende Größe größer als der verminderte charakteristische Wert ist, wenigstens durch Bremseneingriffe an wenigstens einem Rad und/oder durch Motoreingriffe und/oder durch Retardereingriffe, die Geschwindigkeit des Fahrzeuges auf einen vorgebbaren Geschwindigkeitswert reduziert wird.

12. Vorrichtung zur Stabilisierung eines Fahrzeuges, insbesondere zur Vermeidung des Umkippens eines Fahrzeuges um eine in Längsrichtung des Fahrzeuges orientierte Fahrzeugachse,
die Mittel (205) enthält, mit denen eine die Querdynamik des Fahrzeuges beschreibende Größe ermittelt wird, und mit denen ferner die die Querdynamik des Fahrzeuges beschreibende Größe mit wenigstens einem charakteristischen Wert, insbesondere einem Schwellenwert, für die die Querdynamik des Fahrzeuges beschreibende Größe verglichen wird,
**dadurch gekennzeichnet,**
**daß** für den Fall, bei dem festgestellt wird, daß die die Querdynamik des Fahrzeuges beschreibende Größe größer als der oder gleich dem charakteristischen Wert ist, wenigstens durch Bremseneingriffe an wenigstens einem Rad und/oder durch Motoreingriffe und/oder durch Retardereingriffe die Geschwindigkeit des Fahrzeuges auf einen vorgebbaren Geschwindigkeitswert reduziert oder auf einem vorgebbaren Geschwindigkeitswert gehalten wird.

**Claims**

1. Method for stabilizing a vehicle, in particular for preventing a vehicle from tipping over about a vehicle axis which is oriented in the longitudinal direction of the vehicle, in which a variable (aq) which describes the lateral dynamics of the vehicle is determined, in which the variable which describes the lateral dynamics of the vehicle is compared with at least one characteristic value (aggrenz), in particular a threshold value, for the variable which describes the lateral dynamics of the vehicle, **characterized in that** the speed of the vehicle is reduced to a predefinable speed value (vfgrenz) or held at a predefinable speed value, at least by brake interventions (Sixj) at at least one wheel and/or by engine interventions (SM) and/or by retarder interventions (SR), if the variable which describes the lateral dynamics of the vehicle is greater than or equal to the characteristic value.

2. Method according to Claim 1, **characterized in that** the variable which describes the lateral dynamics of the vehicle, in particular a variable which describes the lateral acceleration of the vehicle is used for this, is determined at least as a function of a variable (vf) which describes the speed of the vehicle.

3. Method according to Claim 2, **characterized in that** the variable which describes the lateral dynamics of the vehicle is also determined as a function of a variable (omega) which describes the yaw rate of the vehicle.

4. Method according to Claim 3, **characterized in that** the variable which describes the yaw rate of the vehicle is determined at least as a function of the variable which describes the speed of the vehicle and a variable (delta) which describes the steering angle of the vehicle.

5. Method according to Claim 1, **characterized in that** the characteristic value is a permanently predefined value or a value which is determined for the respective driving state of the vehicle, and/or **in that** that value of the variable which describes the lateral dynamics of the vehicle which is permissible for the vehicle without the vehicle becoming unstable when this value is reached is used for the characteristic value.

6. Method according to Claim 1, **characterized in that** the characteristic value is determined at least as a function of a variable (Rixj) which describes the wheel load of at least one wheel, in particular a variable which describes the contact force of the respective wheel is used as a variable which describes the wheel load.

7. Method according to Claim 6, **characterized in that** the characteristic value is determined as a function of the variable which describes the wheel load of at least one wheel on the inside of a bend and the variable which describes the lateral dynamics of the vehicle, or in that a variable which describes the mass of the vehicle is determined as a function of the variables which describe the wheel loads, and the characteristic value is read out from a characteristic diagram using the variable which describes the mass of the vehicle.

8. Method according to Claim 1, **characterized in that** the predefinable speed value (vfgrenz) is a permanently predefined value, or **in that** the predefinable speed value is determined at least as a function of the characteristic value and/or a variable (omega) which describes the yaw rate of the vehicle, or **in that** the predefinable speed value is determined using a characteristic diagram.

9. Method according to Claim 1, **characterized in that** the brake interventions and/or engine interventions and/or retarder interventions are carried out for as long as the predefinable speed value is lower than a variable (vf) which describes the speed of the vehicle.

10. Method according to Claim 1, **characterized in that** all the wheels of the vehicle are braked uniformly by corresponding brake interventions, or **in that** the wheels of the vehicle are braked by corresponding brake interventions, with at least the rear wheel which is on the inside of a bend being braked to a lesser degree than the other wheels of the vehicle and/or not being braked at all, and/or **in that** the torque which is output by the engine is reduced by corresponding engine interventions.

11. Method according to Claim 1, **characterized in that** the characteristic value is reduced by a small value, with the variable which describes the lateral dynamics of the vehicle being compared with the reduced characteristic value, the speed of the vehicle being reduced to a predefinable speed value, at least by brake interventions at at least one wheel and/or by engine interventions and/or by retarder interventions, if the variable which describes the lateral dynamics of the vehicle is greater than the reduced characteristic value.

12. Device for stabilizing a vehicle, in particular for preventing a vehicle from tipping over about a vehicle axis which is oriented in the longitudinal direction of the vehicle, which contains means (205) with which a variable which describes the lateral dynamics of the vehicle is determined, and with which in addition the variable which describes the lateral dynamics of the vehicle is compared with at least one characteristic value, in particular a threshold value, for the variable which describes the lateral dynamics of the vehicle, **characterized in that** the speed of the vehicle is reduced to a predefinable speed value or held at a predefinable speed value, at least by brake interventions at at least one wheel and/or by engine interventions and/or by retarder interventions, if it is detected that the variable which describes the lateral dynamics of the vehicle is greater than or equal to the characteristic value.

**Revendications**

1. Procédé de stabilisation d'un véhicule, en particulier pour éviter le renversement d'un véhicule autour d'un axe du véhicule orienté dans la direction longitudinale du véhicule, selon lequel on détermine une grandeur décrivant la dynamique transversale du véhicule (aq), on compare la grandeur décrivant la dynamique transversale du véhicule avec au moins une valeur caractéristique (aqgrenz), en particulier une valeur de seuil, pour la grandeur décrivant la dynamique transversale du véhicule,
**caractérisé en ce que**
si la grandeur décrivant la dynamique transversale du véhicule est supérieure ou égale à la valeur caractéristique, on réduit ou on maintient la vitesse du véhicule à une valeur de vitesse prédéterminée (vfgrenz), au moins par des interventions de freinage (Sixj) au niveau d'au moins une roue et/ou par des interventions du moteur (SM) et/ou par des interventions du ralentisseur (SR).

2. Procédé selon la revendication 1,
**caractérisé en ce que**
la grandeur décrivant la dynamique transversale du véhicule, qui est en particulier une grandeur décrivant l'accélération transversale du véhicule, est déterminée au moins en fonction d'une grandeur (vf) décrivant la vitesse du véhicule.

3. Procédé selon la revendication 2,
**caractérisé en ce que**
la grandeur décrivant la dynamique transversale du véhicule est déterminée en fonction d'une grandeur décrivant le taux de lacet du véhicule (omega).

4. Procédé selon la revendication 3,
**caractérisé en ce que**
la grandeur décrivant le taux de lacet du véhicule est déterminée au moins en fonction de la grandeur décrivant la vitesse du véhicule et d'une grandeur décrivant l'angle de braquage du véhicule (delta).

5. Procédé selon la revendication 1,
**caractérisé en ce que**
la valeur caractéristique est une valeur fixement prédéterminée ou est une valeur déterminée pour l'état de conduite respectif du véhicule, et/ou
pour la valeur caractéristique, on utilise la valeur de la grandeur décrivant la dynamique transversale du véhicule qui est autorisée pour le véhicule sans que le véhicule ne devienne instable lorsque cette valeur est atteinte.

6. Procédé selon la revendication 1,
**caractérisé en ce que**
la valeur caractéristique est déterminée au moins en fonction d'une grandeur décrivant la charge de roue d'au moins une roue (Rixj), et en particulier comme grandeur décrivant la charge de roue on utilise une grandeur décrivant la force verticale de la roue respective.

7. Procédé selon la revendication 6,
**caractérisé en ce que**
la valeur caractéristique est déterminée en fonction de la grandeur décrivant la charge de roue d'au moins une roue située à l'intérieur du virage et de la grandeur décrivant la dynamique transversale du véhicule, ou
en fonction des grandeurs décrivant les charges de roue, on détermine une grandeur décrivant la masse du véhicule et la valeur caractéristique est lue à partir d'une caractéristique à l'aide de la grandeur décrivant la masse du véhicule.

8. Procédé selon la revendication 1,
**caractérisé en ce que**
la valeur de vitesse prédéterminée (vfgrenz) est une valeur fixement prédéterminée, ou
la valeur de vitesse prédéterminée est déterminée au moins une fonction de la valeur caractéristique et/ou d'une valeur décrivant le taux de lacet du véhicule (omega), ou
la valeur de vitesse prédéterminée est déterminée à l'aide d'une caractéristique.

9. Procédé selon la revendication 1,
**caractérisé en ce que**

les interventions de freinage et/ou les interventions du moteur et/ou les interventions du ralentisseur se produisent tant que la valeur de vitesse prédéterminée est inférieure à la grandeur décrivant la vitesse du véhicule (vf).

10. Procédé selon la revendication 1,
    **caractérisé en ce que**
    par des interventions de freinage adéquates, on freine toutes les roues du véhicule de manière égale, ou on freine les roues du véhicule de sorte qu'au moins la roue arrière située à l'intérieur du virage est freinée moins fortement que les autres roues du véhicule ou n'est pas du tout freinée, et/ou
    grâce à des interventions du moteur adéquates, on réduit le couple de sortie de moteur.

11. Procédé selon la revendication 1,
    **caractérisé en ce qu'**
    on réduit la valeur caractéristique d'une valeur faible, on compare la grandeur décrivant la dynamique transversale du véhicule avec cette valeur caractéristique réduite et, si la grandeur décrivant la dynamique transversale du véhicule est supérieure à la valeur caractéristique réduite, on réduit la vitesse du véhicule à une valeur de vitesse prédéterminée, au moins par des interventions de freinage au niveau d'au moins une roue et/ou par des interventions du moteur et/ou par des interventions du ralentisseur.

12. Dispositif de stabilisation d'un véhicule, en particulier pour éviter le renversement d'un véhicule autour d'un axe du véhicule orienté dans la direction longitudinale du véhicule,
    qui contient des moyens (205) permettant de déterminer une grandeur décrivant la dynamique transversale du véhicule, et permettant en outre de comparer la grandeur décrivant la dynamique transversale du véhicule avec au moins une valeur caractéristique, en particulier une valeur de seuil, pour la grandeur décrivant la dynamique transversale du véhicule,
    **caractérisé en ce que**
    si l'on détermine que la grandeur décrivant la dynamique transversale du véhicule est supérieure ou égale à la valeur caractéristique, on réduit et on maintient la vitesse du véhicule à une valeur de vitesse prédéterminée, au moins par des interventions de freinage au niveau d'au moins une roue et/ou par des interventions du moteur et/ou par des interventions du ralentisseur.

# Fig. 1a

102v1r      102v2r      102h2r      102h1r

103v1 ¦103v2    103h2 ¦103h1

101

104

102v1l      102v2l      102h2l      102h1l

# Fig. 1b

107vrz    105      107hrz         106        107h2ra   107h1ra

108vz    108hz               108h2a ¦108h1a

109

107vlz        107hlz                 107h2la   107h1la

Fig. 2

EP 0 996 558 B1

# Fig. 3

```
                    ┌──────────────────────┐
                    │ aq , aqgrenz ermitteln │────  301
                    └──────────────────────┘
                              │
                              ▼
                         ╱─────────╲           N
                        ╱ aq ≥ aqgrenz ?╲──────────────►
                         ╲─────────╱
                              │ J        302
                              ▼
                    ┌──────────────────────┐
                    │  vfgrenz bereitstellen │────  303
                    └──────────────────────┘
                              │
┌──────────────────┐         │
│  Bremseneingriffe │         │
│    und / oder     │         │
│  Motoreingriffe   │──── 305 │
│    und / oder     │         │
│ Retardereingriffe │         │
└──────────────────┘         │
          ▲                   ▼
          │  N           ╱─────────╲
          └─────────────╱ vf ≤ vfgrenz ?╲
                         ╲─────────╱
                              │ J        304
```